(19) Europäisches Patentamt
European Patent Office
Office européen des brevets

(11) **EP 4 441 479 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **22822969.6**

(22) Anmeldetag: **28.11.2022**

(51) Internationale Patentklassifikation (IPC):
***G01H 1/00*** *(2006.01)*

(52) Gemeinsame Patentklassifikation (CPC):
**G01H 1/00**

(86) Internationale Anmeldenummer:
**PCT/EP2022/083549**

(87) Internationale Veröffentlichungsnummer:
**WO 2023/094675 (01.06.2023 Gazette 2023/22)**

(54) **VERFAHREN ZUM MESSEN VON SCHWINGUNGEN EINER SCHWINGMASCHINE**

METHOD FOR MEASURING VIBRATIONS OF A VIBRATION MACHINE

PROCÉDÉ DE MESURE DE VIBRATIONS D'UNE MACHINE À VIBRATIONS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.11.2021 DE 102021131189**

(43) Veröffentlichungstag der Anmeldung:
**09.10.2024 Patentblatt 2024/41**

(73) Patentinhaber: **Sandvik Rock Processing Australia Pty Limited**
**North Ryde, NSW 2113 (AU)**

(72) Erfinder:
• **RAIS, Viktor**
**64293 Darmstadt (DE)**
• **SCHÄFER, Jan**
**64293 Darmstadt (DE)**

(74) Vertreter: **Sandvik**
**Sandvik Intellectual Property AB**
**811 81 Sandviken (SE)**

(56) Entgegenhaltungen:
EP-A1- 2 320 203          DE-A1- 102009 031 268
DE-B3- 102017 009 373

## Beschreibung

Die vorliegende Erfindung betrifft Verfahren zum Messen von Schwingungen einer Schwingmaschine.

Maschinen, die eine Schwingeinheit aufweisen, können, wenn die Schwingung der Schwingeinheit gleich oder ähnlich der Eigenfrequenz der Maschine ist, Schaden durch die selbst erzeugte Schwingung nehmen. Durch die periodische Anregung wird immer mehr Energie auf das System übertragen. Durch diese konstruktive Interferenz wird Energie in dem System gespeichert, bis es zur Resonanzkatastrophe kommt. Im schlimmsten Fall kann hierbei die Maschine zerstört werden.

Solche Resonanzkatastrophen machen sich zunächst durch Verformungen der Maschine bemerkbar. Eine Verformung ist hierbei die unerwünschte Änderung bestimmter Bezugspunkte zueinander der Maschine. Dies kann zum Beispiel ein Stauchen, Dehnen oder ein Verdrehen sein. Verformungen können auch unabhängig der Eigenfrequenz entstehen, wenn zum Beispiel eine einseitig starke Belastung an der Maschine auftritt und/oder die Maschine für Zwecke verwendet wird, für die sie nicht oder nur unzureichend konstruiert wurde.

Die Schwingungen können gewünschte Bewegungen der Schwingmaschine als Ganzes sein (Translation) oder unerwünschte Verformungen der Schwingmaschine darstellen.

Solche Verformungen zu messen, ist schwierig, da sie in einer Gesamtvibration der Maschine untergehen können.

Bisher wurde versucht, solche Verformungen durch sogenannte "stroke cards" sichtbar zu machen. Diese "stroke cards" werden an Ecken und Kanten der Maschine befestigt und dann wird im laufenden Betrieb per Hand eine Linie auf diese "stroke cards" gezeichnet. Die Vibrationen der Maschine können dann anhand der gezeichneten Linie näherungsweise bestimmt werden.

Es ist auch bekannt, Stroboskope einzusetzen, die ein schnell flackerndes Licht auf die Maschine werfen und bei geeigneter Wahl der Frequenz Bewegungen der Maschine "einfrieren". So können eventuelle Verformungen visuell betrachtet werden. Ein Nachteil hierbei ist das Messen einer solchen visuellen Betrachtung. Des Weiteren sind Verformungen einer Schwingmaschine im Millimeterbereich zu erwarten. Bei einer Maschine, die mehrere Meter groß ist, können Verformungen so leicht übersehen werden. Des Weiteren sind etliche Teile der Maschine nur schwer oder gar nicht zu erreichen, so dass auch hier Verformungen übersehen werden können.

Des Weiteren sind Systeme bekannt, bei denen Schwingsensoren an die Schwingmaschine befestigt werden. Eine Auswerteeinheit empfängt dann die Daten von den Schwingsensoren und kann durch eine Analyse der gemessenen Schwingungen das Schwing- und Resonanzverhalten der Schwingmaschine ermitteln. Typische Schwingsensoren sind hierbei Beschleunigungssensoren. Ein Problem hierbei ist die aufwändige Kalibrierung der Schwingsensoren untereinander. So muss, damit die Auswerteeinheit die richtigen Rück-schlüsse fällt, die gemessenen Schwingungen der einzelnen Schwingsensoren miteinander in Bezug gebracht werden. Dafür muss der Abstand der einzelnen Schwingsensoren zueinander sowie die Orientierung der Schwingsensoren zueinander bekannt sein. Bisher wurden diese Parameter per Hand gemessen.

Aus der DE 10 2017 009 373 B3 geht eine mobile Vorrichtung zum Erfassen der Zustands- und Betriebsparameter von Schwingmaschinen hervor.

Weiterhin ist aus der DE 10 2012 014 277 A1 ein mobiles Gerät zum Erfassen von Schwingungen an einer Maschine mit rotierenden Maschinenelementen bekannt, bei dem die räumliche Orientierung der Sensormessrichtung während einer Schwingungsmessung mittels eines Gyroskops erfasst und dementsprechend die Schwingungsmessung der räumlichen Orientierung des Sensors zugeordnet werden kann.

Weiterhin ist aus der EP 2 320 203 A1 eine Vorrichtung zur Schwingungsmessung an einer Maschine mit rotierenden Maschinenelementen bekannt, umfassend einen Beschleunigungs-/ Inklinometersensor zur Messung von aus zu messenden Maschinenschwingungen resultierenden Beschleunigungskräften und zur Messung der Schwerkraft. Eine Auswerteelektronik ist dazu ausgebildet, aus dem stationären Anteil des Sensorausgangs die Orientierung des Sensors in Bezug auf die Schwerkraft zu ermitteln und die nicht-stationären Anteile des Sensorausgangs entsprechend der ermittelten Sensororientierung auszuwerten.

Aufgabe der vorliegenden Erfindung ist es, die Orientierung von Schwingsensoren zueinander einfach und schnell zu kalibrieren.

Eine weitere Aufgabe der vorliegenden Erfindung ist es, Schwingungen einer Schwingmaschine einfach, genau und wiederholbar im laufenden Betrieb zu messen.

Eine oder mehrere Aufgaben werden durch die Gegenstände der unabhängigen Ansprüche gelöst. Vorteilhafte Weiterbildungen und bevorzugte Ausführungsformen bilden den Gegenstand der Unteransprüche.

In einem Verfahren werden mit einem Schwingsensor Schwingungen einer Schwingmaschine, insbesondere eines Schwingsiebes und eines Schwingförderers, im laufenden Betrieb gemessen. Der Schwingsensor erfasst Schwingungskomponenten der Schwingungen der Schwingmaschine in drei Raumrichtungen eines kartesischen Sensor-Koordinatensystems. Die drei Schwingungskomponenten bilden einen Schwingvektor. In Schwingungsmessverfahren wird ein Gravitationsvektor, der die Gravitationsrichtung beschreibt, bestimmt. Des Weiteren wird ein Maschinenvektor, der eine Vorzugsrichtung einer aufgezogenen Vibration der Schwingmaschine beschreibt, bestimmt. Zusätzlich wird ein dreidimensionales kartesisches Mess-Koordinatensystem gebildet, das anhand der Gravitationsrichtung und der Vorzugsrichtung ausgerichtet wird. Der Schwingvektor wird aus dem Sensor-Koordinatensystem in das Mess-Koordinatensystem abgebildet.

Durch das hier beschriebene Verfahren kann ein Schwingsensor beliebig auf eine Schwingmaschine platziert werden, ohne dass die Orientierung des Schwingsensors manuell gemessen wird. So ist es auch möglich, Schwingsensoren an Stellen zu platzieren, die schwer zu erreichen sind, da das Anbringen, z.B. durch Magnete, zumeist leichter ist, als mit einem Orientierungsmessgerät, wie eine Wasserwaage, die Orientierung zu bestimmen.

Des Weiteren ist das automatische Auswerten der Orientierung des Schwingsensors genauer als eine manuelle Messung, da die manuelle Messung lediglich anhand des Gehäuses des Schwingsensors erfolgen kann, während bei der automatischen Messung die Messwerte des Schwingsensors selber herangezogen werden.

Zusätzlich ist das automatische Verfahren deutlich schneller als eine manuelle Messung, da hierzu nur wenige Vibrationszyklen notwendig sind. Das bedeutet, dass innerhalb von wenigen Sekunden genügend Daten gesammelt werden, um die Orientierung des Schwingsensors zuverlässig zu bestimmen. Bei einer manuellen Messung hingegen muss ein Nutzer zunächst zu dem Sensor gelangen und dann die Messung in Bezug zur Schwingmaschine durchführen, was länger dauert als diese paar Sekunden.

Der Schwingsensor ist ein Beschleunigungssensor, welcher die auf ihn aufgebrachte Beschleunigung in drei Dimensionen misst und ausgibt.

Eine Vibration im Sinne der vorliegenden Erfindung ist eine aufgezogene Schwingung. Diese kann beispielsweise mit einem Schwingantrieb, zum Beispiel einem Unwuchtmotor, erzeugt werden. Die Vibration kann eindimensional, d.h. entlang einer Richtung oder auch zweidimensional, d.h. entlang zweier Richtungen, erfolgen. Hier sind sogenannte Ellipsenvibration oder Kreisvibration bekannt. Es sind auch Vibrationen in drei Richtungen möglich.

Die gesamte Schwingmaschine schwingt, angetrieben durch die Vibration, in die gleiche Richtung. Dies nutzt das hier beschriebene Verfahren aus, um neben der Gravitation den zweiten Vektor zu definieren, um die Orientierung im dreidimensionalen Raum zu erhalten.

Der Maschinenvektor beschreibt direkt oder indirekt die Vorzugsrichtung der Vibration.

Direkt bedeutet, dass bei der Bestimmung des Maschinenvektors die Vorzugsrichtung dann entlang der eindimensionalen Vibrationsrichtung, bzw. bei mehrdimensionalen Vibrationen entlang der Richtung mit der stärksten Auslenkung verläuft.

Indirekt bedeutet, dass der Maschinenvektor durch eine mathematische Transformation aus der Vorzugsrichtung bestimmt wird. So kann beispielsweise der Maschinenvektor senkrecht zu der Vorzugsrichtung sein. Dies ist besonders dann sinnvoll, wenn man eine Kreisvibration hat, in der beide Richtungen der Vibration gleich stark ausgeprägt sind.

Grundsätzlich zeigt der Maschinenvektor in die Vorzugsrichtung. Es ist jedoch auch möglich, dass der Maschinenvektor eine Projektion der Vorzugsrichtung auf eine vorbestimmte Ebene ist. Diese Ebene ist bspw. eine durch zwei Achsen aufgespannte Ebene eines weiteren Übergangs-Koordinatensystems, das unten anhand des Ausführungsbeispiels näher erläutert wird.

Das Abbilden des Mess-Koordinatensystems und das Abbilden der Schwingung in das Mess-Koordinatensystem kann bereits in Teilen vor der Bestimmung des Maschinenvektors oder des Gravitationsvektors beginnen. Hierbei wird der Schwingvektor in Abhängigkeit des bereits bestimmten Maschinenvektors oder Gravitationsvektors gedreht.

Die Gravitationsrichtung, welche durch den Gravitationsvektor beschrieben wird, weist Richtung des Schwerezentrums der Erde.

Durch die Vorgabe des Gravitationsvektors und des Maschinenvektors liegen zwei von der Orientierung des Schwingsensors unabhängige Vektoren vor, die in Bezug zur Schwingmaschine fest sind, jedoch von den Schwingsensoren ermittelt werden können.

Um die Ausrichtung eines Objektes, hier des Schwingsensors, im Raum zu ermitteln, sind zwei Vektoren nötig. Diese sind durch den Gravitationsvektor und den Maschinenvektor gegeben.

Das vorliegende Verfahren funktioniert nur dann, wenn die Schwingmaschine im laufenden Betrieb ist. Nur im laufenden Betrieb wird der Schwingmaschine eine Vibration aufgezwungen, so dass dann ein Maschinenvektor bestimmt wird.

Erfindungsgemäß wird der Gravitationsvektor als zeitlicher Mittelwert der Schwingungen bestimmt.

Die Gravitation ist die einzige Beschleunigungskraft, die dauerhaft in gleicher Richtung auf den Schwingsensor wirkt. Die aufgezwungenen Vibrationen schwingen um einen Null-Wert. Zeitlich mitteln sich diese aufgezwungenen Vibrationen daher auf Null. Bei einer zeitlichen Mittelung ergibt sich somit ein Gravitationsvektor, der die Richtung der Erdanziehungskraft aufweist.

Für die zeitliche Mittelung ist eine Dauer von zumindest einem Vibrationszyklus notwendig. Bevorzugt werden hier aber einige Vibrationszyklen. Typischerweise werden hier die Werte von einigen Sekunden gemittelt, um auch harmonische und subharmonische der Vibrationen heraus zu mitteln.

Erfindungsgemäß werden zur Bestimmung des Maschinenvektors die Schwingungen durch eine Fast Fourier-Transformation (FFT) in den Fourier-Raum überführt. Die dort bestimmten Amplituden der Schwingungen einer von der Schwingmaschine vorgegebenen Anregungsfrequenz bilden einen Amplitudenvektor, der in Vorzugsrichtung zeigt, wodurch der Maschinenvektor bestimmbar ist.

Die Schwingmaschine schwingt in einer durch die Vibration vorgegebenen Anregungsfrequenz. Diese ist zumeist einstellbar und wird durch den Schwingantrieb vorgegeben. Werden die Schwingungen mit Hilfe der FFT in den Fourier-Raum überführt, gibt es an der Position der Anregungsfrequenz drei Amplitudenwerte, für jede Raumrichtung des Sensor-Koordinatensystems eine. Diese drei Amplituden stellen einen Vektor dar, der die Summe aller Vektoren umfasst, in der die Vibration durchgeführt wird. Ist die Vibration eindimensional, entspricht dieser Amplitudenvektor dem Vibrationsvektor. Ist die Vibration zweidimensional und ellipsenförmig, so ist der Amplitudenvektor die Addition des Vibrationsvektors entlang der Hauptachse und des Vibrationsvektors entlang der Nebenachse der elliptischen Vibration. Der Amplitudenvektor hat einen festen vorgegebenen Bezug zur Vorzugsrichtung.

Dieser feste Bezug kann derart gestaltet sein, dass der Amplitudenvektor gleich der Vorzugsrichtung gesetzt wird.

Alternativ kann dieser feste Bezug aber auch eine Drehung beinhalten. Eine solche Drehung, die fest vorgegeben ist, bedeutet, dass der ermittelte Amplitudenvektor auf bestimmte Art und Weise gedreht wird. Dies kann beispielsweise derart sein, dass der Vektor um 90° entlang einer Achse gedreht wird oder gespiegelt wird oder auf eine vorgegebene Achse abgebildet wird.

Der feste Bezug kann auch dadurch gegeben sein, dass der Maschinenvektor eine Abbildung des Amplitudenvektors auf eine vorbestimmte Ebene ist. Dies kann z.B. durch das Ersetzen eines der Vektorelemente, wie z.B. das für die z-Achse, mit Null durchgeführt werden.

Gemäß einer ersten Ausbildungsform verläuft eine erste Achse des Mess-Koordinatensystems parallel oder antiparallel zu dem Gravitationsvektor.

Diese erste Achse ist zumeist die Z-Achse und beschreibt im Allgemeinen die Höhe.

Gemäß der ersten Ausbildungsform verläuft eine zweite Achse des Mess-Koordinatensystems entlang zu der ersten Achse orthogonalen Anteil des Maschinenvektors.

Es ist in der Regel nicht gegeben, dass der Maschinenvektor senkrecht zum Gravitationsvektor liegt. Beide Vektoren können daher nicht ohne Weiteres ein orthogonales Koordinatensystem aufspannen. Daher wird hier nur der zur ersten Achse orthogonale Anteil des Maschinenvektors gewählt, um die zweite Achse des Mess-Koordinatensystems zu bilden.

Gemäß einer alternativen Ausbildungsform sind die Schritte vertauscht, so dass die erste Achse des Mess-Koordinatensystems parallel oder antiparallel zu dem Maschinenvektor verläuft und dass die zweite Achse des Mess-Koordinatensystems entlang zu der ersten Achse orthogonalen Anteil des Gravitationsvektors verläuft. Vorzugsweise wird die Position der Schwingsensoren durch ein Funkortungssystem, insbesondere ein Sattelitenortungssystem, wie z.B. ein globales Positionsbestimmungssystem (z.B. GPS, GLONASS, Galileo, Beidou) ermittelt. Das Funkortungssystem kann auch ein Mobilfunknetz sein, wobei der Sensor mit den nächsten benachbarten Sendern des Mobil-funknetzes Peilungssignale austauscht.

Hierdurch ist es besonders einfach die Schwingsensoren in das entsprechende Koordinatensystem zu übertragen, ohne manuell die Position zu bestimmen. Es vereinfacht auch die Sensorabstände zueinander zu bestimmen.

Vorzugsweise werden in zeitlich regelmäßigen Abständen der Messung der Schwingungen Zeitstempel hinzugefügt.

Diese Zeitstempel können sowohl relativ sein, indem zum Beispiel die Mikrosekunden an-gegeben werden, die seit der letzten vollen Stunde abgelaufen sind, oder absolut sein, und die absolute Zeit darstellen. Diese Zeitstempel sind in den Schwingsignalen enthalten. Damit die Sensoren absolute Zeitstempel abgeben können, weisen sie eine Uhr auf, welche gegenüber einer externen Uhr synchronisiert werden kann.

Vorzugsweise ist die Ungenauigkeit der Uhr nicht größer als 400 μs, vorzugsweise 200 μs und insbesondere 100 μs.

Vorzugsweise werden mehrere Schwingsensoren ausgerichtet.

Werden mehrere Schwingsensoren ausgerichtet, sind die gemessenen Schwingungen ebenfalls ausgerichtet und stehen miteinander in Bezug. Eine Analyse der gemessenen Schwingungen zueinander ist hierdurch möglich.

So ist es beispielsweise möglich, Verformungen der Schwingmaschine zu messen, indem die gemessenen Schwingungen zweier zueinander ausgerichteten Schwingsensoren voneinander abgezogen werden.

Vorzugsweise bleibt die räumliche Zuordnung der Schwingsensoren zueinander bei der Ausrichtung erhalten.

Das bedeutet, dass zwei Schwingsensoren, die ursprünglich einen bestimmten Abstand voneinander hatten, diesen Abstand auch nach der Ausrichtung beibehalten. Zwei Schwingsensoren, die 3 m voneinander beabstandet sind, sind auch nach der Ausrichtung 3 m voneinander beabstandet.

Vorzugsweise sind diese Abstände vorbestimmt.

Durch den vorbestimmten Sensorabstand können Verformungen zwischen zwei Schwingsensoren absolut dargestellt werden. So macht es einen Unterschied, ob die Verformung mit einer Amplitude von 2 mm die Sensoren 5 cm oder 5 m voneinander beabstandet sind.

Außerdem wird durch den Abstand die Darstellung der Verformung bzw. der Schwingungen in Relation zur Abmessung der Schwingmaschine möglich.

Vorzugsweise wird einer der Schwingsensoren als Referenzschwingsensor ausgewählt und der Referenzschwingsensor definiert den Ursprung eines Verformungskoordinatensystem.

Das Verformungskoordinatensystem schwingt dadurch relativ zum umliegenden Raum mit. Betrachtet man jedoch die Schwingsensoren in diesem Verformungskoordinatensystem, so wird dadurch die Translationsbewegung herausgerechnet und die Bewegungen, die im Verformungskoordinatensystem angezeigt werden, stellen eine Verformung da.

Vorzugsweise werden alle Relativschwingungssignale in Bezug auf den Referenzschwingsensor berechnet.

Dadurch ist es möglich, eine vom Referenzschwingsensor ausgehende Änderung einer Verformung zu verfolgen. So kann es beispielsweise sein, dass eine Verformung im Bereich um den Referenzschwingsensor eher einer Dehnung entspricht und dann im weiter entfernten Bereich eher einer Verdrillung entspricht.

Vorzugsweise ist der Referenzschwingsensor möglichst nah an der Schwingungsquelle angeordnet.

Die Schwingungsquelle ist meist ein Schwingmotor.

Möglichst nah bedeutet in diesem Zusammenhang, dass der Referenzschwingsensor nicht weiter als 50 cm, vorzugsweise nicht weiter als 25 cm und insbesondere nicht weiter als 10 cm weit von der Schwingungsquelle angeordnet ist.

Die Schwingungsquelle ist der Hauptgrund, dass es bei der Schwingmaschine zu einer Verformung kommen kann. Des Weiteren treten bei der Schwingungsquelle die stärksten Schwingungen auf. Werden diese heraussubtrahiert, indem dort möglichst nah der ReferenzSchwingsensor angeordnet wird, lässt sich die durch die Schwingung verursachte Verformung der Schwingmaschine nachverfolgen.

Vorzugsweise spannen, wenn mehr als zwei Schwingsensoren genutzt werden, diese eine Fläche oder einen Raum auf.

Wenn ein Raum aufgespannt wird, kann so auch in allen drei Raumachsen eine Verformung bestimmt werden. Wird lediglich eine Fläche oder eine Linie aufgespannt, können Verformungen nur innerhalb der Fläche oder entlang der Linie bestimmt werden.

Ein System zur Bestimmung der Ausrichtung eines Schwingsensors an einer Schwingmaschine oder eines Schwingförderers im laufenden Betrieb ist zum Ausführen eines oben beschriebenen Verfahrens ausgebildet. Das System umfasst zumindest einen Schwingsensor und eine Auswerteeinheit.

Die Erfindung wird nachfolgend anhand der in den Zeichnungen dargestellten Beispiele näher erläutert. Die Zeichnungen zeigen schematisch in:

Figur 1 eine Seitenansicht einer Schwingmaschine mit einem Schwingsensor und einer Auswerteeinrichtung,

Figur 2 eine Seitenansicht einer Schwingförderrinne mit angebrachten Schwingsensoren und Schwingantrieb,

Figur 3 verschiedene Koordinatensysteme in Bezug auf die Gravitationskraft und der Vibrationsrichtung,

Figur 4 Verfahren zum Messen von Schwingungen einer Schwingmaschine in einem Flussdiagramm,

Figur 5 Verfahren der Drehung des Schwingvektors in Bezug zum Gravitationsvektor in einem Flussdiagramm, und

Figur 6 Verfahren der Drehung des Schwingvektors in Bezug zum Maschinenvektor in einem Flussdiagramm.

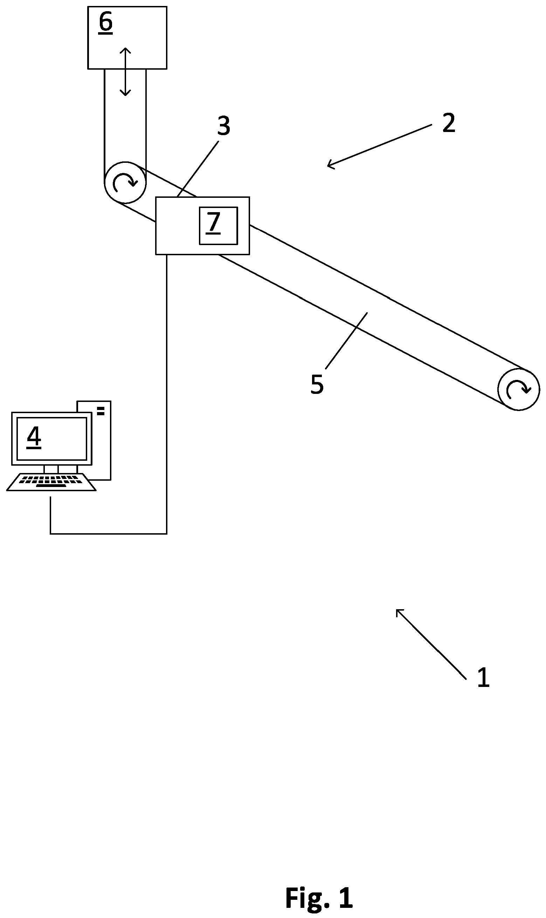

Ein Ausführungsbeispiel eines Systems zur Resonanzanalyse einer Schwingmaschine 1 umfasst einen Schwingförderer 2, eine Schwingungsdetektionseinrichtung 3 und eine Auswerteeinrichtung 4 (Figur 1).

Der Schwingförderer 2 ist zum Fördern von Schüttgut, z.B. Gussstücke ausgebildet. Es sind jedoch auch beliebig andere Einsatzgebiete möglich. Der Schwingförderer 2 umfasst eine Schwingförderrinne 5 mit Seitenwangen 8 und einen Schwingantrieb 6.

Die Schwingförderrinne 5 ist mit einem Förderboden (nicht dargestellt) ausgebildet, das in einem Schwingrahmen angeordnet ist. Der Förderboden befördert das Schüttgut. Ein Schwingantrieb 6 ist mit dem Schwingrahmen verbunden und setzt diesen in Schwingbewegungen.

Der Schwingantrieb 6 ist unter einem vorbestimmten Winkel zum Förderboden (nicht dargestellt) ausgerichtet und setzt diesen in eine vorbestimmte Richtung weisend in Schwingungen.

Der Schwingantrieb 6 kann bezüglich der Schwingfrequenz eingestellt werden.

Der Schwingantrieb ist unter einem vorbestimmten Winkel a zur Schwingförderrinne 5 angeordnet.

Die Schwingförderrinne 5 ist unter einem vorbestimmten Winkel β bezüglich der Schwerkraft ausgerichtet.

Das Förderverhalten kann durch Einstellen des Winkel α, β und/oder der Frequenz beeinflusst werden.

Der Schwingantrieb 6 umfasst einen Unwuchtmotor, welcher in diesem Ausführungsbeispiel ein Drehstrommotor ist, der an einem Wellenende ein im Radius verstellbares Unwuchtgewicht (nicht dargestellt) aufweist. Die Amplitude der erzeugten Schwingung kann durch manuelle Einstellung der Unwucht verändert werden. Die Frequenz wird durch die Drehzahl des Motors bestimmt.

Im vorliegenden Ausführungsbeispiel werden zwei gegenläufige Antriebe verwendet. Ein einzelner Motor würde eine Kreisbewegung und nicht eine lineare Schwingung erzeugen.

Die Schwingungsdetektionseinrichtung 3 weist zumindest einen Schwingsensor 7 auf. Der Schwingsensor 7 ist ein Beschleunigungssensor, welcher Schwingungen des Schwingförderers 2 in allen drei Raumachsen misst. Jeder Schwingsensor 7 misst hierzu die Schwingung entlang drei Sensorachsen, die durch den Schwingsensor 7 vorgegeben ist. Die Sensorachsen sind auf den Schwingsensoren 7 aufgezeichnet. Die Sensorachsen sind fest mit der Ausrichtung des Schwingsensors 7 verknüpft. Dreht sich der Schwingsensor 7, drehen sich auch die Sensorachsen.

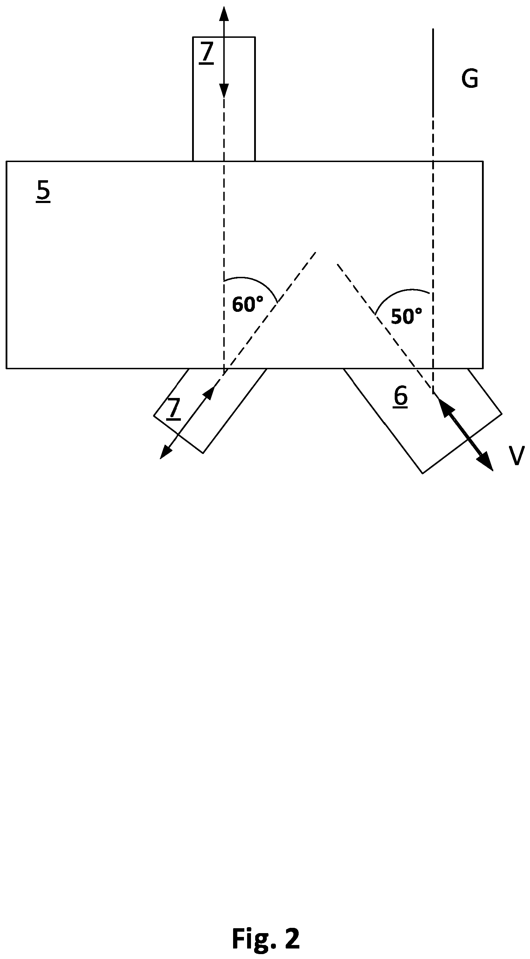

Der Schwingsensor 7 und der Schwingantrieb 6 weisen einen bestimmten Winkel zur Schwingförderrinne 5 auf (Figur 2).

Der Schwingsensor 7 ist über eine Funkverbindung mit der Auswerteeinrichtung 4 verbunden. Es sind grundsätzlich auch kabelgebundene Verbindungen möglich.

Der Schwingsensor 7 ist als ein sogenanntes "Micro-Electro-Mechanical Systems" (MEMS) ausgeführt.

Die Verbindung zwischen der Schwingungsdetektionseinrichtung 3 und der Auswerteeinrichtung 4 kann über Funk, beispielsweise Bluetooth, WLAN, ZigBee, Z-Wave oder über ein Mobilfunknetz erfolgen, oder kabelgestützt sein, z. B. über ein LAN-Netzwerk.

Der Schwingsensor 7 ist über eine Anbringvorrichtung mit dem Schwingförderer 2 verbunden. Diese Verbindung kann fest (z. B. durch Schrauben) oder lösbar (z. B. durch Klebestreifen oder einen Klemmmechanismus) ausgebildet sein.

Die Auswerteeinrichtung 4 kann als Computer, herkömmliches Smartphone oder Tablet ausgebildet sein. Die Auswerteeinrichtung weist ein Empfangsmodul auf, um die Daten des Schwingsensors 7 zu empfangen. Die Auswerteeinrichtung 4 verarbeitet mit einer zusätzlichen Software-Applikation, auch App genannt, die Daten des Schwingsensors 7.

Die Auswerteeinrichtung 4 kann auch eine Anzeigeeinrichtung umfassen, die die erfassten und weiterverarbeiteten Daten optisch ausgibt.

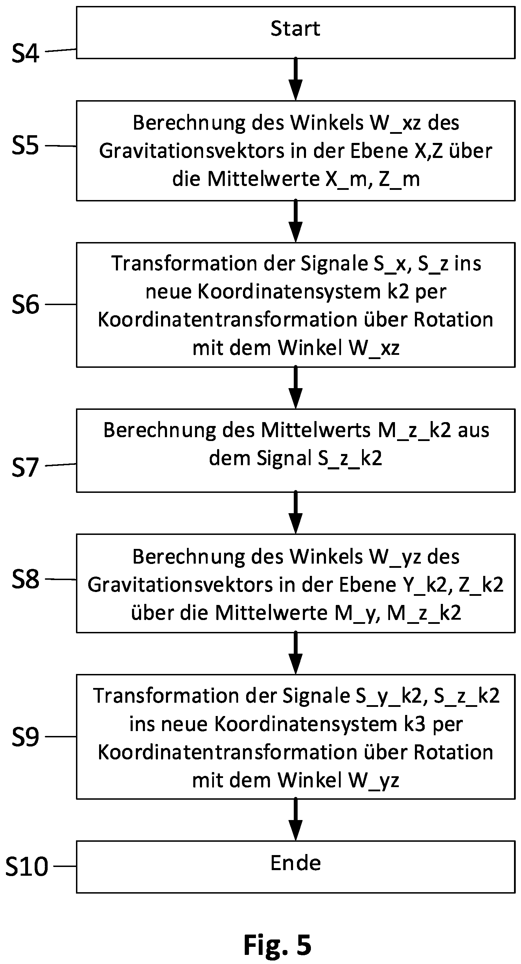

Nachfolgend wird das Verfahren zur Bestimmung der Ausrichtung eines Schwingsensors an einer Schwingmaschine erläutert (Figur 5).

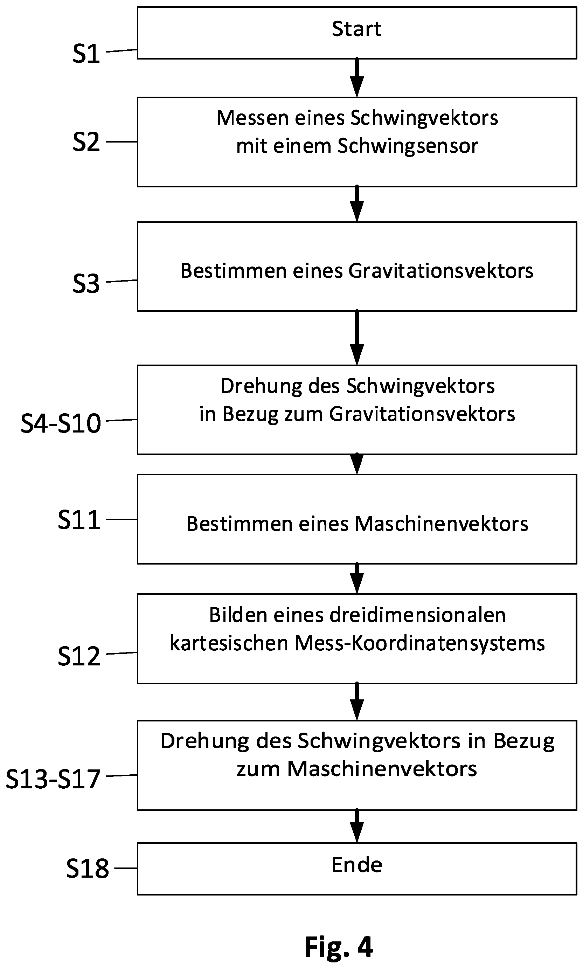

Nachfolgend wird das Verfahren zum Messen von Schwingungen einer Schwingmaschine erläutert (Figur 4). Das Verfahren beginnt mit Schritt S1.

Im nächsten Schritt (S2) wird ein Schwingvektor **S**=(S_x, S_y, S_z) mit dem Schwingsensor 7 gemessen. Der Schwingvektor **S** befindet sich im Sensor-Koordinatensystem k1.

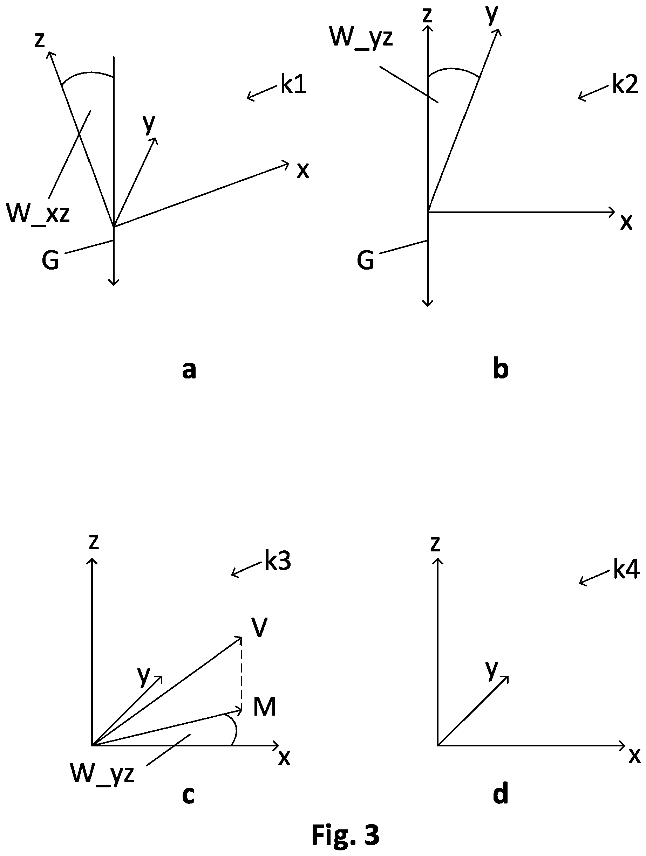

Anschließend wird ein Gravitationsvektor **G** bestimmt (Schritt S3). Hierzu wird ein Mittelwertvektor (M_x, M_y, M_z) aus dem Schwingsensor (S_x, S_y, S_z) gebildet. Der Mittelwertvektor bildet den Gravitationsvektor G im Koordinatensystem k1 (Figur 3a).

Zum Bilden des Mittelwertes wird der zeitliche Mittelwert von wenigen Sekunden, typischerweise 2 bis 60 Sekunden gebildet. Es schadet dem Verfahren aber auch nicht, längere Intervalle zu wählen. Es sollten zumindest 10 Mal der Inversen der Anregerfrequenz gewählt werden, um später eine vernünftige Fouriertransformation durchführen zu können.

In den folgenden Schritten S4-S10 wird der Schwingvektor **S** in Bezug zum Gravitationsvektor **G** gedreht.

Die Drehung beginnt mit Schritt S4 (Figur 5).

Es folgt Schritt S5, in dem ein Winkel W_xz des Gravitationsvektors **G** in der xz-Ebene berechnet wird.

Der Winkel W_xz wird über die Mittelwerte M_x und M_z mit einer Arkustangens-Funktion berechnet.

Im folgenden Schritt (S6) werden die Schwingkomponenten S_x, S_y, S_z des Schwingvektors S in ein neues Koordinatensystem k2, welches ein Übergangs-Koordinatensystem ist, per Koordinatentransformation über Rotation mit dem Winkel W_xz transformiert. Dabei ist

$$S\_y\_k2 = S\_y.$$

Danach wird in Schritt S7 ein Mittelwert M_z_k2 aus der transformierten Schwingungskomponente S_z_k2 des transformierten Schwingvektors S_k2 berechnet.

Darauffolgend wird der Winkel W_yz des Gravitationsvektors **G** in der Y_k2, Z_k2-Ebene berechnet (Schritt S8) (Figur 3b). Der Winkel W_yz wird über die Mittelwerte M_y, M_z_k2 mit einer Arkustangens-Funktion berechnet.

Im nächsten Schritt (S9) werden die Schwingkomponenten S_y_k2 und S_z_k2 eines transformierten Schwingvektors S_k2 in ein neues Koordinatensystem k3, welches ein Übergangs-Koordinatensystem ist, per Koordinatentransformation über Rotation mit dem Winkel W_yz transformiert. Dabei ist S_x_k3 = S_x_k2. Die Drehung des Schwingvektors **S** in Bezug zum Gravitationsvektors endet hiermit mit Schritt S10.

Anschließend wird in Schritt S11 der Maschinenvektor gebildet (Figur 4).

Hierzu wird ein Amplitudenvektor **A** mit den Komponenten A_x, A_y und A_z berechnet. Der Amplitudenvektor **A** wird dadurch bestimmt, dass die transformierten Schwingungskomponenten S_x_k3, S_y_k3, S_z_k3 durch eine Fast-Fourier-Transformation (FFT) in den Fourier-Raum transformiert werden. Anschließend werden die Amplituden A_x, A_y und A_z bei der Betriebsfrequenz des Schwingantriebes 6 im Fourier-Spektrum der einzelnen Schwingungskomponenten bestimmt.

Der Amplitudenvektor **A** verläuft entlang einer Vorzugsrichtung.

Der Maschinenvektor M ist gegeben durch (A_x, A_y, 0) Das ist Projektion des Amplitudenvektors **A** auf die XY-Ebene des Koordinatensystems k3 (Figur 3c).

Im folgenden Schritt S12 wird ein dreidimensionales kartesisches Mess-Koordinatensystem k4 gebildet. Hierbei zeigt die Z-Achse von k4 in die entgegengesetzte Richtung des Gravitationsvektors **G**. Die X-Achse des Mess-Koordinatensystems verläuft entlang des Maschinenvektors **M**.

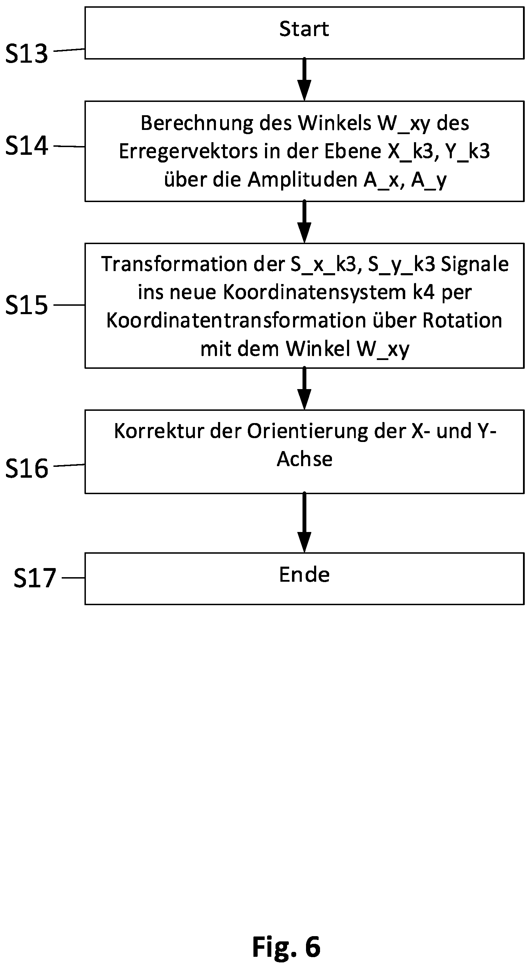

In den Schritten S13-S17 wird der transformierte Schwingvektor S_k3 in Bezug zum Maschinenvektor **M** gedreht (Figur 6).

Die Drehung beginnt mit Schritt S13.

Im nächsten Schritt (S14) wird der Winkel W_xy des Maschinenvektors **M** in der X_k3, Y_k3-Ebene über seine Komponenten A_x und A_y mit einer Arkustangens-Funktion berechnet. Anschließend werden in Schritt S15 die transformierten Schwingungskomponenten S_x_k3 und S_y_k3 in das Mess-Koordinatensystem k4 per Koordinatentransformation über Rotation mit dem Winkel W_xy transformiert. Dabei ist S_z_k4 = S_z_k3.

Es folgt Schritt S16, in dem die Orientierung der X- und Y-Achse korrigiert wird. Es ist zu diesem Zeitpunkt noch unbekannt, ob die X_k4-Achse und die Y_k4-Achse ein rechtshändiges oder linkshändiges Koordinatensystem aufspannen. Dies kann über die Phasendifferenz zwischen den Komponenten des Maschinenvektors A_x und A_z berechnet werden. Wenn ein linkshändiges Koordinatensystem vorliegt, kann dies durch einen Vorzeichenwechsel der X- oder Y-Achse korrigiert werden.

Die Drehung ist mit Schritt S17 beendet.

Dies beendet auch das Abbilden des Schwingvektors **S** aus dem Sensor-Koordinatensystem k1 in das Mess-Koordinatensystem k4 (S18).

Die Drehungen in den Schritten S4-S10 und S13-S17 entsprechen das Abbilden in das Mess-Koordinatensystem.

Erfindungsgemäß werden die Schwingsignale S_x, S_y, S_z auf eine ganzzahlige Anzahl der Perioden der Erreger-Frequenz gerundet. Das verbessert die Mittelwertberechnung zur Bestimmung des Gravitationsvektors G.

Bezugszeichen

1   System zur Resonanzanalyse einer Schwingmaschine
2   Schwingungsmaschine
3   Schwingungsdetektionseinrichtung
4   Auswerteeinrichtung
5   Schwingförderrinne
6   Schwingantrieb
7   Schwingsensor
8   Seitenwange

**Patentansprüche**

**1.** Verfahren zum Messen von Schwingungen einer Schwingmaschine (1), insbesondere eines Schwingsiebes oder eines Schwingförderers (2), im laufenden Betrieb, bei dem die Schwingmaschine (1) in einer durch einen Schwingantrieb (6) vorgegebenen Anregungsfrequenz schwingt,

mit einem Schwingsensor (7), der Schwingungskomponenten (S_x, S_y, S_z) der Schwingungen der Schwingmaschine (1) in drei Raumrichtungen eines kartesischen Sensor-Koordinatensystems (k1) erfasst,
wobei die drei Schwingungskomponenten (S_x, S_y, S_z) einen Schwingvektor (S) bilden und folgende Schritte ausgeführt werden:

- Bestimmen eines Gravitationsvektors (G), der die Gravitationsrichtung beschreibt, wobei der Gravitationsvektor als zeitlicher Mittelwert der vom Schwingsensor erfassten Schwingungen (S_x, S_y, S_z) der Schwingmaschine (1) bestimmt wird, wobei die Schwingsignale (S_x, S_y, S_z) auf eine ganzzahlige Anzahl der Perioden der Anregungsfrequenz gerundet werden,
- Bestimmen eines Maschinenvektors (M), der eine Vorzugsrichtung einer aufgezwungenen Vibration der Schwingmaschine beschreibt, wobei zur Bestimmung des Maschinenvektors die Schwingungen (S_x, S_y, S_z) durch eine Fast Fourier-Transformation in den Fourier-Raum überführt werden und die dort bestimmten Amplituden der Schwingungen einer von der Schwingmaschine vorgegebenen Anregungsfrequenz einen Amplitudenvektor (A) bilden, der in Vorzugsrichtung zeigt,
- Bilden eines dreidimensionalen kartesischen Mess-Koordinatensystems (k4), das anhand der Gravitationsrichtung und der Vorzugsrichtung ausgerichtet wird, wobei eine erste Achse des Mess-Koordinatensystems (k4) parallel oder antiparallel zu dem Gravitationsvektor (G) verläuft und eine zweite Achse des Mess-Koordinatensystems (k4) entlang des zur ersten Achse orthogonalen Anteils des Maschinenvektors (M) verläuft oder eine erste Achse des Mess-Koordinatensystems (k4) parallel oder antiparallel zu dem Maschinenvektor (M) verläuft und eine zweite Achse des Mess-Koordinatensystems (k4) entlang des zur ersten Achse orthogonalen Anteils des Gravitationsvektors (G) verläuft und
- Abbilden des Schwingvektors (S) aus dem Sensor-Koordinatensystem (k1) in das Mess-Koordinatensystem (k4).

**2.** Verfahren nach Anspruch 1 ,
**dadurch gekennzeichnet,**
**dass** die Position des Schwingsensors (7) durch ein globales Positionsbestimmungssystem z.B. GPS, GLONASS, Galileo, Beidou, ermittelt wird.

**3.** Verfahren nach einem der Ansprüche 1 oder 2,
**dadurch gekennzeichnet,**

**dass** in zeitlich regelmäßigen Abständen der Messung der Schwingungen Zeitstempel hinzugefügt werden.

4. Verfahren nach einem der Ansprüche 1 bis 3, **dadurch gekennzeichnet,** **dass** mehrere Schwingsensoren ausgerichtet werden.

5. Verfahren nach Anspruch 4, **dadurch gekennzeichnet,** **dass** die räumliche Zuordnung der Schwingsensoren zueinander bei der Ausrichtung erhalten bleibt.

6. Verfahren nach Anspruch 4 oder 5, **dadurch gekennzeichnet,** **dass** einer der Schwingsensoren (7) als Referenzschwingsensor ausgewählt wird und der Referenzschwingsensor den Ursprung des Mess-Koordinatensystems (k4) definiert.

7. Verfahren nach Anspruch 6, **dadurch gekennzeichnet,** **dass** alle Schwingungssignale in Bezug auf den Referenzschwingsensor berechnet werden.

8. Verfahren nach einem der Ansprüche 6 oder 7, **dadurch gekennzeichnet,** **dass** der Referenzschwingsensor möglichst nah an und nicht weiter als 50 cm von dem Schwingantrieb (6) angeordnet ist, vorzugsweise nicht weiter als 25 cm und insbesondere nicht weiter als 10 cm.

9. Verfahren nach einem der Ansprüche 6 bis 8, **dadurch gekennzeichnet,** **dass**, wenn mehr als zwei Schwingsensoren (7) genutzt werden, diese eine Fläche oder einen Raum aufspannen.

10. System zur Bestimmung der Ausrichtung eines Schwingsensors an einer Schwingmaschine oder eines Schwingförderers im laufenden Betrieb, das zum Ausführen eines Verfahrens der Ansprüche 1 bis 9 ausgebildet ist, wobei das System zumindest einen Schwingsensor (7) und eine Auswerteeinheit umfasst.

**Claims**

1. Method for measuring vibrations of a vibrating machine (1), in particular a vibrating screen or a vibrating conveyor (2), during operation, in which the vibrating machine (1) vibrates at an excitation frequency predetermined by a vibrating drive (6),

   with a vibration sensor (7) which detects vibration components ($S\_x$, $S\_y$, $S\_z$) of the vibrations of the vibrating machine (1) in three spatial directions of a Cartesian sensor coordinate system (kl), wherein the three vibration components ($S\_x$, $S\_y$, $S\_z$) form a vibration vector (S) and the following steps are carried out:

   - determining a gravitational vector (G) which describes the gravitational direction, wherein the gravitational vector is determined as the time average of the vibrations ($S\_x$, $S\_y$, $S\_z$) of the vibrating machine (1) detected by the vibration sensor, wherein the vibration signals ($S\_x$, $S\_y$, $S\_z$) are rounded to an integer number of the periods of the excitation frequency,
   - determining a machine vector (M) which describes a preferred direction of an imposed vibration of the vibrating machine, wherein the vibrations ($S\_x$, $S\_y$, $S\_z$) are converted into the Fourier space by a Fast Fourier transformation in order to determine the machine vector, and the amplitudes, determined there, of the vibrations of an excitation frequency specified by the vibrating machine form an amplitude vector (A) which points in the preferred direction,
   - forming a three-dimensional Cartesian measurement coordinate system (k4) which is aligned on the basis of the gravitational direction and the preferred direction, wherein a first axis of the measurement coordinate system (k4) extends parallel or antiparallel to the gravitational vector (G) and a second axis of the measurement coordinate system (k4) extends along the portion of the machine vector (M) which is orthogonal to the first axis, or a first axis of the measurement coordinate system (k4) extends parallel or antiparallel to the machine vector (M) and a second axis of the measurement coordinate system (k4) extends along the portion of the gravitational vector (G) which is orthogonal to the first axis, and - mapping the vibration vector (S) from the sensor coordinate system (k1) into the measurement coordinate system (k4).

2. Method according to claim 1, **characterized in that** the position of the vibration sensor (7) is ascertained by a global positioning system, e.g. GPS, GLONASS, Galileo, Beidou.

3. Method according to any one of claims 1 or 2, **characterized in that** time stamps are added to the measurement of the vibrations at regular intervals.

**4.** Method according to any one of claims 1 to 3, **characterized in that** several vibration sensors are aligned.

**5.** Method according to claim 4, **characterized in that** the spatial assignment of the vibration sensors to one another is retained during the alignment.

**6.** Method according to claim 4 or 5, **characterized in that** one of the vibration sensors (7) is selected as the reference vibration sensor and the reference vibration sensor defines the origin of the measurement coordinate system (k4).

**7.** Method according to claim 6, **characterized in that** all vibration signals are calculated with respect to the reference vibration sensor.

**8.** Method according to any one of claims 6 or 7, **characterized in that** the reference vibration sensor is arranged as close as possible to and no further than 50 cm from the vibration drive (6), preferably no further than 25 cm and in particular no further than 10 cm.

**9.** Method according to any one of claims 6 to 8, **characterized in that**, if more than two vibration sensors (7) are used, they span a surface or a space.

**10.** System for determining the alignment of a vibration sensor on a vibrating machine or a vibrating conveyor during operation, which is designed to carry out a method according to claims 1 to 9, wherein the system comprises at least one vibration sensor (7) and an evaluation unit.

**Revendications**

**1.** Procédé de mesure de vibrations d'une machine à vibrations (1), en particulier d'un tamis à vibrations ou d'un convoyeur à vibrations (2), en cours de fonctionnement, dans lequel la machine à vibrations (1) vibre à une fréquence d'excitation prédéfinie par un entraînement à vibrations (6),

avec un capteur de vibrations (7) qui détecte des composantes de vibrations ($S\_x$, $S\_y$, $S\_z$) des vibrations de la machine à vibrations (1) dans trois directions spatiales d'un système de coordonnées de capteur cartésien (kl), dans lequel les trois composantes de vibrations ($S\_x$, $S\_y$, $S\_z$) forment un vecteur de vibrations (S) et les étapes suivantes sont mises en œuvre :

- détermination d'un vecteur de gravitation (G) qui décrit la direction de gravitation, dans lequel le vecteur de gravitation est déterminé en tant que valeur moyenne dans le temps des vibrations ($S\_x$, $S\_y$, $S\_z$) de la machine à vibrations (1) détectées par le capteur de vibrations, dans lequel les signaux de vibrations ($S\_x$, $S\_y$, $S\_z$) sont arrondis à un nombre entier des périodes de la fréquence d'excitation,
- détermination d'un vecteur machine (M) qui décrit une direction préférentielle d'une vibration imposée de la machine à vibrations, dans lequel les vibrations ($S\_x$, $S\_y$, $S\_z$) sont transformées dans l'espace de Fourier par une transformation de Fourier rapide pour la détermination du vecteur machine, et les amplitudes des vibrations d'une fréquence d'excitation prédéfinie par la machine à vibrations qui y sont déterminées forment un vecteur d'amplitude (A) qui pointe dans la direction préférentielle,
- formation d'un système de coordonnées de mesure cartésien tridimensionnel (k4) qui est orienté à l'aide de la direction de gravitation et de la direction préférentielle, dans lequel un premier axe du système de coordonnées de mesure (k4) s'étend parallèlement ou antiparallèlement au vecteur de gravitation (G) et un second axe du système de coordonnées de mesure (k4) s'étend le long de la partie du vecteur machine (M) orthogonale au premier axe ou un premier axe du système de coordonnées de mesure (k4) s'étend parallèlement ou antiparallèlement au vecteur machine (M) et un second axe du système de coordonnées de mesure (k4) s'étend le long de la partie du vecteur de gravitation (G) orthogonale au premier axe et - mapper le vecteur de vibrations (S) du système de coordonnées de capteur (kl) dans le système de coordonnées de mesure (k4).

**2.** Procédé selon la revendication 1, **caractérisé en ce que** la position du capteur de vibrations (7) est déterminée par un système de positionnement global, par ex. GPS, GLONASS, Galileo, Beidou.

**3.** Procédé selon l'une quelconque des revendications 1 ou 2, **caractérisé en ce que** des horodateurs sont ajoutés à la mesure des vibrations à intervalles réguliers dans le temps.

**4.** Procédé selon l'une quelconque des revendications 1 à 3,
**caractérisé en ce que**
plusieurs capteurs de vibrations sont orientés.

5. Procédé selon la revendication 4,
   **caractérisé en ce que**
   l'affectation spatiale des capteurs de vibrations les uns aux autres est conservée lors de l'orientation.

6. Procédé selon la revendication 4 ou 5,
   **caractérisé en ce que**
   l'un des capteurs de vibrations (7) est sélectionné en tant que capteur de vibrations de référence et le capteur de vibrations de référence définit l'origine du système de coordonnées de mesure (k4).

7. Procédé selon la revendication 6,
   **caractérisé en ce que**
   tous les signaux de vibrations sont calculés par rapport au capteur de vibrations de référence.

8. Procédé selon l'une quelconque des revendications 6 ou 7,
   **caractérisé en ce que**
   le capteur de vibrations de référence est disposé le plus près possible de l'entraînement à vibrations (6) et pas à plus de 50 cm de celui-ci, de préférence pas à plus de 25 cm et en particulier pas à plus de 10 cm.

9. Procédé selon l'une quelconque des revendications 6 à 8,
   **caractérisé en ce que**
   lorsque plus de deux capteurs de vibrations (7) sont utilisés, ceux-ci s'étendent sur une surface ou un espace.

10. Système de détermination de l'orientation d'un capteur à vibrations sur une machine à vibrations ou un convoyeur à vibrations en cours de fonctionnement, qui est conçu pour mettre en œuvre un procédé selon les revendications 1 à 9,
    dans lequel le système comprend au moins un capteur à vibrations (7) et une unité d'évaluation.

**Fig. 1**

**Fig. 2**

**Fig. 3**

```
          ┌─────────────────────────────────────────┐
S1 ───────│                  Start                   │
          └─────────────────────────────────────────┘
                              │
                              ▼
          ┌─────────────────────────────────────────┐
S2 ───────│       Messen eines Schwingvektors        │
          │        mit einem Schwingsensor           │
          └─────────────────────────────────────────┘
                              │
                              ▼
          ┌─────────────────────────────────────────┐
S3 ───────│    Bestimmen eines Gravitationsvektors   │
          └─────────────────────────────────────────┘
                              │
                              ▼
          ┌─────────────────────────────────────────┐
S4-S10 ───│        Drehung des Schwingvektors        │
          │    in Bezug zum Gravitationsvektors      │
          └─────────────────────────────────────────┘
                              │
                              ▼
          ┌─────────────────────────────────────────┐
S11 ──────│     Bestimmen eines Maschinenvektors     │
          └─────────────────────────────────────────┘
                              │
                              ▼
          ┌─────────────────────────────────────────┐
S12 ──────│      Bilden eines dreidimensionalen      │
          │   kartesischen Mess-Koordinatensystems   │
          └─────────────────────────────────────────┘
                              │
                              ▼
          ┌─────────────────────────────────────────┐
S13-S17 ──│  Drehung des Schwingvektors in Bezug     │
          │         zum Maschinenvektors             │
          └─────────────────────────────────────────┘
                              │
                              ▼
          ┌─────────────────────────────────────────┐
S18 ──────│                  Ende                    │
          └─────────────────────────────────────────┘
```

**Fig. 4**

| | |
|---|---|
| S4 | Start |
| S5 | Berechnung des Winkels W_xz des Gravitationsvektors in der Ebene X,Z über die Mittelwerte X_m, Z_m |
| S6 | Transformation der Signale S_x, S_z ins neue Koordinatensystem k2 per Koordinatentransformation über Rotation mit dem Winkel W_xz |
| S7 | Berechnung des Mittelwerts M_z_k2 aus dem Signal S_z_k2 |
| S8 | Berechnung des Winkels W_yz des Gravitationsvektors in der Ebene Y_k2, Z_k2 über die Mittelwerte M_y, M_z_k2 |
| S9 | Transformation der Signale S_y_k2, S_z_k2 ins neue Koordinatensystem k3 per Koordinatentransformation über Rotation mit dem Winkel W_yz |
| S10 | Ende |

**Fig. 5**

```
         ┌─────────────────────────────────────────┐
S13 ─────┤                  Start                   │
         └─────────────────────────────────────────┘
                              │
                              ▼
         ┌─────────────────────────────────────────┐
         │   Berechnung des Winkels W_xy des        │
S14 ─────┤   Erregervektors in der Ebene X_k3, Y_k3 │
         │        über die Amplituden A_x, A_y      │
         └─────────────────────────────────────────┘
                              │
                              ▼
         ┌─────────────────────────────────────────┐
         │ Transformation der S_x_k3, S_y_k3 Signale│
         │   ins neue Koordinatensystem k4 per      │
S15 ─────┤  Koordinatentransformation über Rotation │
         │          mit dem Winkel W_xy             │
         └─────────────────────────────────────────┘
                              │
                              ▼
         ┌─────────────────────────────────────────┐
         │   Korrektur der Orientierung der X- und Y-│
S16 ─────┤                 Achse                     │
         └─────────────────────────────────────────┘
                              │
                              ▼
         ┌─────────────────────────────────────────┐
S17 ─────┤                  Ende                    │
         └─────────────────────────────────────────┘
```

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017009373 B3
- DE 102012014277 A1
- EP 2320203 A1